# EUROPEAN PATENT APPLICATION

(11) **EP 2 728 457 A2**
(43) Date of publication of application: **07.05.2014**
(21) Application number: 13191661.1
(22) Date of filing: 05.11.2013
(51) Int. Cl.: G06F 3/0488, G06F 3/0482

(54) **Display method and electronic device using the same**

(30) Priority: 06.11.2012 KR 20120124957
(71) Applicant: Samsung Electronics Co., Ltd, Gyeonggi-do 443-742 (KR)
(72) Inventor: Lee, Hae-Dong, Daegu (KR)
(74) Representative: Jenkins, Richard Gavin

(57) **Abstract**

A method of displaying an object state in an electronic device is provided. The method includes displaying an object list on a main screen, determining an object selected by a user's gesture, and displaying the selected object on a sub screen.

## Description

### TECHNICAL FIELD

The present disclosure relates to a method and device for displaying an object state in an electronic device. More particularly, the present disclosure relates to a method and device for arranging a selected object at a position that a user desires.

### BACKGROUND

With the rapid development of electronic devices recently, electronic devices capable of providing wireless voice calls and information exchange have become necessities of modem life. When electronic devices were first adopted, the electronic devices were recognized as devices that were simple to carry and that made wireless calls possible. However, as technology developed and wireless internet was introduced, the application range of electronic devices has widened (e.g., so as to allow for game play, remote controller functionality using short range communication, and image capturing by a mounted digital camera, simple phone call functionality, calendar management or scheduling functionality, and/or the like).

As mentioned above, as multimedia services are provided, the amount of information processed and displayed by the electronic devices is increased. Accordingly, users have growing interest in an electronic device equipped with a touch screen, which increases the size of a display unit by improving space utilization.

The touch screen is an input/display device in one screen that inputs and displays information. Accordingly, when the touch screen is used, the electronic devices may increase a display area by removing an additional input device such as a keypad. For example, when a full touch type (e.g., an entire screen is applied as a touch screen) is used, the front of the electronic device is utilized as a screen, so that the screen size may be enlarged.

In such a way, the electronic device having an enlarged screen size may display a plurality of objects. The objects displayed on the screen of the electronic device may refer to components displayed on the electronic device, such as menu interfaces (e.g., icons) for function execution of data, thumbnails, multimedia data, and/or the like.

Furthermore, a standby screen of the electronic device includes a plurality of pages, and the above-mentioned objects may be disposed therein.

In general, the electronic device may change a page of the standby screen and move an object according to a user's gesture. For example, the electronic device may arrange a selected object at the position that a user desires.

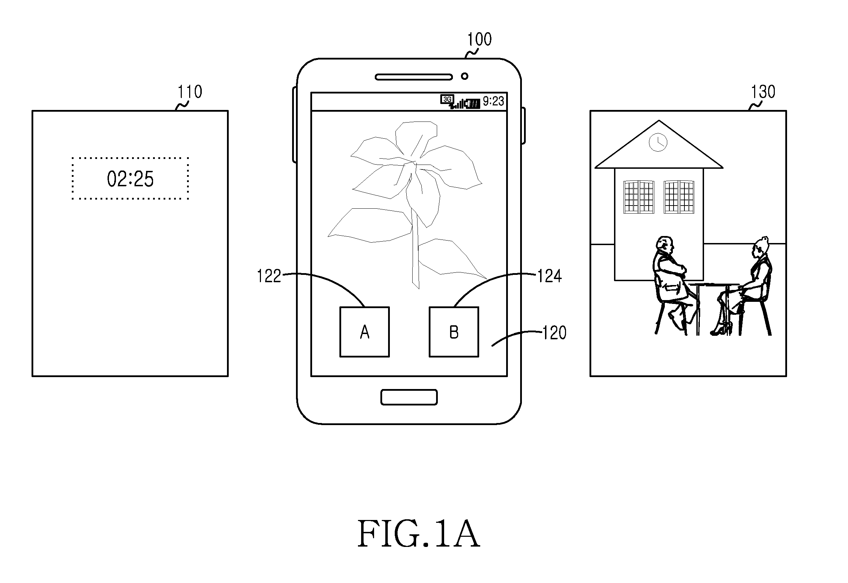

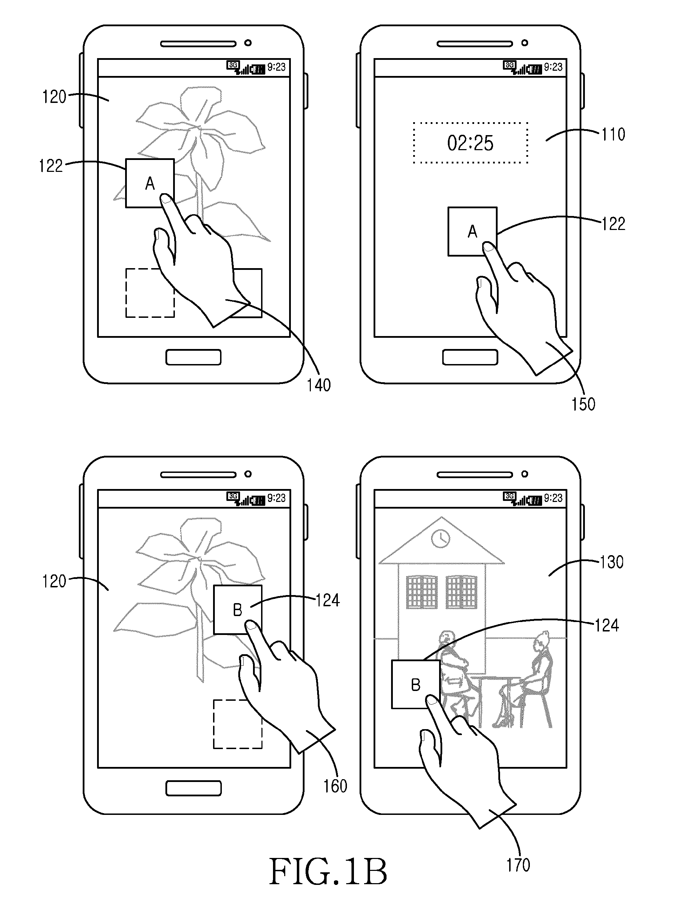

FIGS. 1A and 1B are views illustrating a process of changing a position of an object on a standby screen of a typical electronic device.

Referring to FIG. 1A, the electronic device 100 may display a standby screen of three pages. Such a standby screen is a defined by a user. Referring to FIG. 1A, a watch indicating a current time is displayed on the standby screen 110 of the first page, and a flower image background is set on and an object A 122 and an object B 124 are displayed on the standby screen 120 of the second page. Furthermore, a houses image background is set on the standby screen 130 of the third page and no additional object is arranged thereon.

It is assumed that a user of the electronic device 100 attempts to move the object A 122 on the standby screen 120 of the second page to the standby screen 110 of the first page, and also the object B 124 on the standby screen 120 of the second page to the standby screen 130 of the third page.

In this case, referring to FIG. 1B, at operation 140, the user of the electronic device 100 selects the object A 122 on the standby screen 120 of the second page and generates a gesture for page switching to switch a currently output page into the first page standby screen 110. Thereafter, at operation 150, the user arranges the object A 122 on the switched first page standby screen 110.

Thereafter, at operation 160, the user of the electronic device 100 switches the switched displayed first page standby screen 110 into the second page standby screen 120 having another object arranged thereon, and selects the object B 124 that is to be moved to the third page standby screen 130.

For example, after the object B 124 of the switched page is selected, at operation 170, the currently output page standby screen switches into the third page standby screen 130, and the object B 124 is arranged on the switched page standby screen 130.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly an aspect of the present disclosure is to provide an electronic device for changing a page of the standby screen and move an object according to a user's gesture. For example, the electronic device may arrange a selected object at the position that a user desires.

In general, after selecting an object, a user of the electronic device drags and moves the selected object to a desired page. Such an electronic device may perform a drag operation repeatedly when moving an object.

A touch screen of such an electronic device has a limited size, so that the number of objects displayed on one screen is limited. Therefore, the objects need to be displayed as a page is changed. Especially, when the number of objects to be displayed is large, a user of the electronic device needs to switch a standby screen frequently so as to confirm or select an object.

Furthermore, when objects selected by a user disappear from a current screen due to a screen switch and the selected objects are cancelled, a user needs to place the objects that are to be cancelled into an original screen again.

When a display size of the object is reduced, the number of objects to be displayed on one screen is increased to solve the above issue. However, because the size of an object is reduced, recognizing the object may become inconvenient.

Another aspect of the present disclosure is to substantially solve at least the above problems and/or disadvantages and to provide at least the advantages below. Accordingly, an object of the present disclosure is to provide a device and method of simplifying an edit process (e.g., move, select, select and cancel, delete, and/or the like) of an object in an electronic device.

Another aspect of the present disclosure is to provide a device and method of displaying a list of selected objects on a portion of a screen in an electronic device.

Another aspect of the present disclosure is to provide a device and method of displaying objects that are not displayed on a current screen among selected objects on a portion of a screen in an electronic device.

Another aspect of the present disclosure is to provide a device and method of changing a list of selected objects when a displayed screen is switched in an electronic device.

Another aspect of the present disclosure is to provide a device and method of removing a newly displayed selected object from a selected object list when a screen is switched in an electronic device.

In accordance with an aspect of the present disclosure, a method of displaying an object state in an electronic device is provided. The method includes displaying an object list on a main screen, determining an object selected by a user's gesture, and displaying the selected object on a sub screen.

In accordance with an aspect of the present disclosure, the method may further include performing an edit process on the selected object on the sub screen, wherein the edit process may include at least one of a process of moving the selected object to the main screen, a process of selecting the selected object, a process of cancelling the selected object, a process of deleting the selected object, a process of grouping the selected object, and a process of transmitting the selected object.

In accordance with an aspect of the present disclosure, the sub screen may be displayed in at least one form of a portion of the main screen, a layer on the main screen, a pop-up window, and an indication bar.

In accordance with an aspect of the present disclosure, the displaying of the selected object on the sub screen may include classifying only selected objects disappearing from a current output screen and including the classified selected objects on the sub screen.

In accordance with an aspect of the present disclosure, the displaying of the selected object on the sub screen may include: displaying the selected object on the sub screen when the selected object disappears from a current output screen resulting from page switching, and removing the selected object from the sub screen when the selected object on the sub screen is displayed on a current output screen.

In accordance with an aspect of the present disclosure, the displaying of the selected object on the sub screen may include displaying direction information on the selected object.

In accordance with an aspect of the present disclosure, the displaying of the selected object on the sub screen may include changing an arrangement of the selected object on the sub screen according to the user's gesture.

In accordance with an aspect of the present disclosure, the displaying of the selected object on the sub screen may include one of including a portion of the selected object on the sub screen, overlapping and displaying the selected object, folding and displaying the selected object, and adjusting and displaying a size of the selected object.

In accordance with another aspect of the present disclosure, an electronic device displaying an object state is provided. The electronic device includes a display, and at least one processor, wherein the at least one processor displays an object list on a main screen, determines an object selected by a user's gesture, and displays the selected object on a sub screen.

In accordance with an aspect of the present disclosure, the at least one processor may perform an edit process on the selected object on the sub screen, wherein the edit process may include at least one of a process of moving the selected object to the main screen, a process of selecting the selected object, a process of cancelling the selected object, a process of deleting the selected object, a process of grouping the selected object, and a process of transmitting the selected object.

In accordance with an aspect of the present disclosure, the at least one processor may display the sub screen through at least one of a portion of the main screen, a layer on the main screen, a pop-up window, and an indication bar.

In accordance with an aspect of the present disclosure, the at least one processor may classify only selected objects disappearing from a current output screen and includes the classified selected objects on the sub screen.

In accordance with an aspect of the present disclosure, the at least one processor may display the selected object on the sub screen when the selected object disappears from a current output screen resulting from page switching, and may remove the selected object from the sub screen when the selected object on the sub screen is displayed on a current output screen.

In accordance with an aspect of the present disclosure, the at least one processor may display direction information on the selected object.

In accordance with an aspect of the present disclosure, the at least one processor may change an arrangement of the selected object on the sub screen according to the user's gesture.

In accordance with an aspect of the present disclosure, the at least one processor may include a portion of the selected object on the sub screen, overlaps and displays the selected object, folds and displays the selected object, and adjusts and displays a size of the selected object.

In accordance with another aspect of the present disclosure, a non-transitory computer readable recording medium having a program recorded thereon, which, when executed by an electronic device, causes the electronic device to display an object list on a main screen, to determine an object selected by a user's gesture, and to display the selected object on a sub screen.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:

FIGS. 1A and 1B are views illustrating a process of changing a position of an object on a standby screen of a typical electronic device according to an embodiment of the present disclosure;

FIG. 2 is a block diagram illustrating a configuration of an electronic device performing an object state displaying process according to an embodiment of the present disclosure;

FIG. 3 is a flowchart illustrating a process of displaying an object state in an electronic device according to an embodiment of the present disclosure;

FIG. 4 is a flowchart illustrating a process of processing an object displayed on a sub screen in an electronic device according to an embodiment of the present disclosure;

FIGS. 5A, 5B and 5C are views of a screen when an electronic device displays an object state according to an embodiment of the present disclosure;

FIGS. 6A and 6B are views of a screen when an electronic device displays an object state according to an embodiment of the present disclosure;

FIG. 7 is a view of a screen when an electronic device displays an object state according to an embodiment of the present disclosure;

FIGS. 8A and 8B are views illustrating a method of displaying an object on a sub screen in an electronic device according to an embodiment of the present disclosure;

FIGS. 9A, 9B, 9C and 9D are views illustrating a method of displaying an object on a sub screen in an electronic device according to an embodiment of the present disclosure;

FIGS. 10A and 10B are views illustrating a method of displaying an object on a sub screen in an electronic device according to an embodiment of the present disclosure; and

FIGS. 11A and 11B are views illustrating a method of displaying an object on a sub screen in an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the present disclosure. In addition, descriptions of well-known functions and configurations may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In description below, by displaying a list of objects selected by an electronic device on a portion of a screen, a device and method of simplifying an edit process of an object (e.g., move, select, select and cancel, delete, object transfer, and/or the like) will be described.

According to various embodiments of the present disclosure, an edit process of an object moves a displayed object to another position, selects and cancels a specific object from an object list, or deletes a selected object. The object may refer to components displayed on the electronic device, such as menu interfaces (e.g., icons) for function execution of data, thumbnails, multimedia data, and/or the like.

Additionally, in this specification, a gesture refers to a touch pattern of a touch screen in an electronic device. The touch is made on a touch screen of an electric device through external input means such as a user's finger or a stylus pen, and the gesture refers to a drag of a predetermined pattern while the touch is maintained on the touch screen. If necessary, the gesture refers to a drag and touch release while the touch is maintained.

Furthermore, the electronic device may be a portable electronic device, and also may be a device such as a portable terminal, a mobile phone, a media player, a tablet computer, a handheld computer, a Personal Digital Assistant (PDA), a handheld e-book, a Global Positioning System (GPS) navigation, a portable game console, and the like. Additionally, the electronic device may be an arbitrary portable electronic device combining at least two functions of such devices.

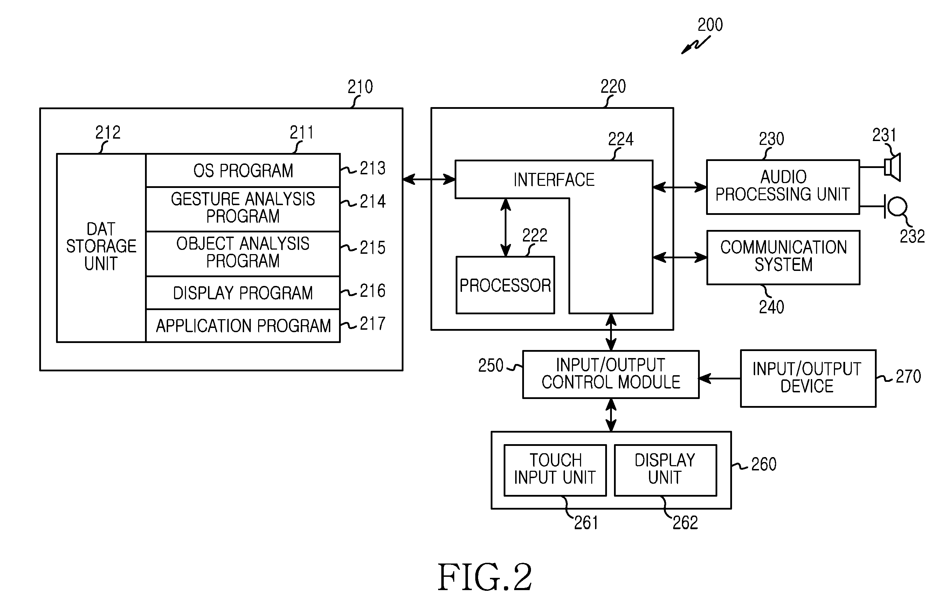

FIG. 2 is a block diagram illustrating a configuration of an electronic device performing an object state displaying process according to an embodiment of the present disclosure.

Referring to FIG. 2, the electronic device 200 may include a memory 210, a processor unit 220, an audio processing unit 230, a communication system 240, an input/output control unit 250, a touch screen 260, and an input device 270. According to various embodiments of the present disclosure, at least one component of the mentioned configuration may include a plurality of components. According to various embodiments of the present disclosure, the electronic device 200 may include a plurality of memories or a plurality of communication systems.

The memory 210 may include a program storage unit 211 storing a program for controlling an operation of the electronic device 200 and a data storage unit 212 for storing data generated during program execution. For example, according to various embodiments of the present disclosure, the data storage unit 212 may store updatable various updatable data for storage such as phone books, outgoing messages and incoming messages, and also may store objects, such as, for example, components displayable on the electronic device, such as menu interfaces (e.g., icons) for function execution of data, thumbnails, multimedia data, and/or the like.

Furthermore, the data storage unit 212 may store user's gesture information for performing an edit process of an object (e.g., move, select, select and cancel, delete, and/or the like).

Additionally, the program storage unit 211 may include an Operating System (OS) program 213, a gesture analysis program 214, an object analysis program 215, a display program 216, and at least one application program 217. A program included in the program storage unit 211 may be expressed in an instruction set as a set of instructions.

The OS program 213 may include various software components for controlling general system operations. Controlling such a general system operation means memory management and control, storage hardware (device) control and management, and power control and management, for example. The OS program 213 may serve to allow smooth communication between hardware (devices) and program components (modules).

The gesture analysis program 214 may analyze a user's gesture to perform a process such as object move, object select, select and cancel, and object delete.

For one example, the gesture analysis program 214 may analyze a user's gesture for selecting an object to be edited and editing the selected object and a user's gesture for switching a standby screen being outputted.

Furthermore, the gesture analysis program 214 analyzes a user's gesture and delivers the analyzed result to the object analysis program 215.

The object analysis program 215 includes various software components for confirming a state of an object corresponding to a user's gesture.

According to various embodiments of the present disclosure, the object analysis program 215 may separate objects selected by a user from objects not selected by a user in a displayed object list, and may confirm whether the selected object disappears from a current output screen due to page switching, or whether a preselected object not being displayed is newly displayed on a switched page. The object analysis program 215 may confirm a state of an object corresponding to a user's gesture and then, may deliver the state of the object corresponding to the user's gesture to the display program 216.

The display program 216 may include various software components for providing and displaying graphics on the touch screen 260. The term "graphics" includes texts, web pages, icons, digital images, videos, animations, and/or the like.

Furthermore, the display program 216 includes various software components relating to a user interface.

According to various embodiments of the present disclosure, the display program 216 displays an object selected according to a user's gesture, and displays an edit process of the selected object.

In addition, the display program 216 may classify an object selected by a user and display the object selected by the user on a portion of a display screen. At this point, the display program 216 may output only a selected object not being displayed on a current screen among objects selected by a user, on the sub screen.

In addition, the display program 216 may output a selected object having a changed size on the sub screen.

As another example, the display program 216 may output overlapping objects on the sub screen.

As another example, the display program 216 may output the selected object on the sub screen, being in a folded state such as a wrinkle or a cascade form.

In addition, the display program 216 may output an object displayed on the sub screen in correspondence to a hidden direction.

The application program 217 may include a software component for at least one application program installed in the electronic device 200.

A program included in the program storage unit 211 may run through a hardware configuration. According to various embodiments of the present disclosure, the electronic device 200 may include a gesture analysis module, an object analysis module, and a gesture analysis module.

The processor unit 220 may include at least one processor 222 and interface 224. The processor 222 and the interface 224 may be integrated as one circuit or may be implemented using an additional component.

The interface 224 may serve as a memory interface for controlling an access of the processor 222 and the memory 210. In addition, the interface 224 may serve as a peripheral interface for controlling a connection between an input/output peripheral device and the processor 222 of the electronic device 200.

The processor 222 may control the electronic device 200 to display an object state through at least one software program. At this point, the processor 222 executes at least one program stored in the memory 210 so as to perform a function corresponding to a corresponding program. For example, the processor 222 may include a displaying processor for analyzing a user's gesture and for displaying an object selected according to a user's gesture. According to various embodiments of the present disclosure, a function of displaying an object state of the electronic device 200 may be performed through software such as a program stored in the memory 210 or hardware such as the displaying processor.

The audio processing unit 230 may provide an audio interface between a user and the electronic device 200 through a speaker 231 and a microphone 232.

The communication system 240 may perform a communication function for voice communication and data communication of the electronic device 200. According to various embodiments of the present disclosure, the communication system may include a plurality of communication sub modules supporting different communication networks. For example, a communication network is not limited to the above, and may include a Global System for Mobile Communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a wireless LAN, a Bluetooth network, Near Field Communication (NFC), and/or the like.

The input/output control unit 250 may provide an interface between an input/output device such as a touch screen 260 and an input device 270 and an interface.

The touch screen 260, as an input/output device for outputting/inputting information, may include a touch input unit 261 and a display unit 262.

The touch input unit 261 may provide touch information obtained through a touch panel to the processor unit 220 through the input/output control unit 250. As an example, the touch input unit 261 may change touch information into an instruction structure such as touch_down, touch_move, touch_up, and/or the like, and then, provide the instruction structure to the processor unit 220, so that a user's gesture for displaying an object state may be generated.

The display unit 262 may display state information of the electronic device 200, characters entered by a user, moving pictures, and still pictures. For example, the display unit 262 displays a state of an object changed according to a user's gesture.

The input unit 270 may provide input data generated by a user's selection to the processor unit 220 through the input/output control unit 250. For example, the input device 270 may be configured including only a control button for controlling the electronic device 200. As another example, according to various embodiments of the present disclosure, the input device 270 may be configured with a keypad for receiving input data from a user, so that user's input data for displaying an object state may be generated.

Although not shown, the electronic device 200 may further include components for providing additional functions such as a cameral module for capturing an image or moving picture, a broadcast receiving module for receiving a broadcast, a digital music playing module such as an MP3 module, a short-range wireless communication module for short-range wireless communication, and a proximity sensor module for proximity sensing and also, software for operations thereof.

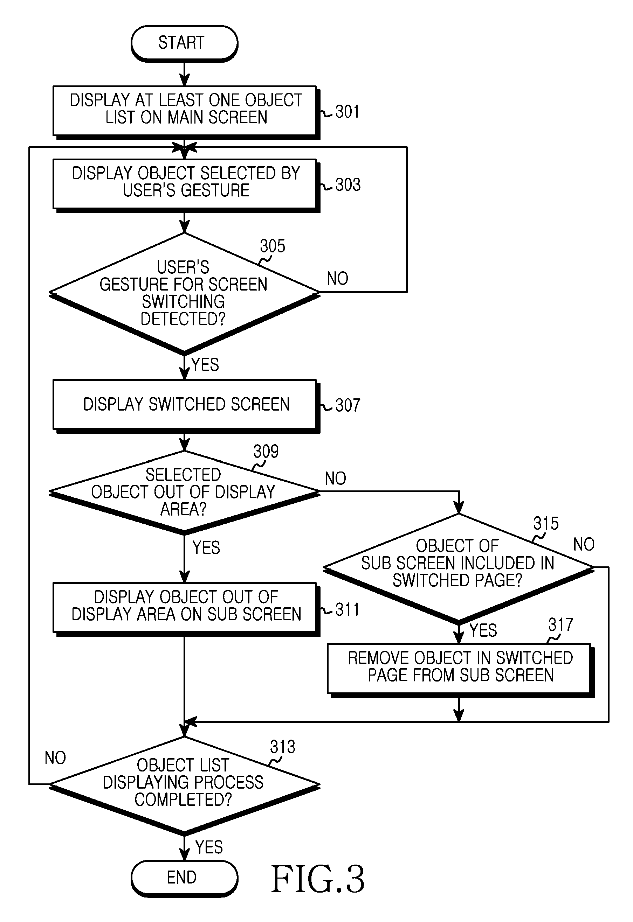

FIG. 3 is a flowchart illustrating a process of displaying an object state in an electronic device according to an embodiment of the present disclosure.

Referring to FIG. 3, the displayed object state means a state in which an object is selected by a user or a state in which an object is not selected by a user in a displayed object list, and a screen (e.g., a display area) of the electronic device includes a main screen and a sub screen. The main screen may be a full screen (e.g., the display area of the electronic device), and the sub screen may be a portion of the main screen. Furthermore, a position of the sub screen may not be fixed and thus, may be changed dynamically within the main screen. Additionally, the object list may include a list of image data in a gallery, multimedia data in a multimedia storage, a widget list, and an icon list.

At operation 301, the electronic device displays at least one object list on the main screen.

At operation 303, the electronic device displays an object selected by a user's gesture. For example, the electronic device assigns a check box to a portion of each object to apply a specific effect to the check box of an object selected by a user. As another example, by changing a border color of an object selected by a user, selected objects and unselected objects are divided and displayed.

At operation 305, the electronic device proceeds to confirm whether a user's gesture for screen switch is detected. For example, at operation 305, the electronic device determines whether a user's gesture corresponds to a request to switch the screen.

In general, the electronic device may display a standby screen configured with a plurality of pages, and a user may switch an output screen by using a specific gesture. For example, the electronic device may detect a touch drag and switch a page in a corresponding direction.

If the electronic device determines that the user's gesture for screen switch is not detected at operation 305, then the electronic device proceeds to operation 303 at which the electronic device performs a process of displaying an object selected by a user again.

In contrast, if the electronic device determines that the user's gesture for screen switch is detected at operation 305, then the electronic device proceeds to operation 307 at which the electronic device displays a screen switched by the user's gesture.

At operation 309, the electronic device confirms whether the selected object is out of the display area. For example, at operation 309, the electronic device determines whether the selected object is out of the display area.

The electronic device displays an object list on a plurality of pages, and a page including a preselected object switches into another page by a user's gesture. Accordingly, the electronic device confirms whether a selected object in a page displayed before switch disappear from the display screen due to page switching, or whether a predetermined object not displayed is newly displayed on a switched page.

If the electronic device determines that the preselected object is out of the display area due to page switching at operation 309, then the electronic device proceeds to operation 311 at which the electronic device displays the selected object out of the display area on the sub screen.

The electronic device classifies objects not displayed on a screen among objects selected by a user and displays the objects on the sub screen.

At this point, the electronic device may display the sub screen in an area at which components configuring the main screen do not overlap each other. For example, the electronic device may arrange the sub screen at the border of the main screen that does not overlap a menu of the main screen. As another example, the electronic device displays an additional layer on the main screen and then, may display an object not displayed on a screen among objects selected by a user, on the displayed layer.

As another example, the electronic device may pop up an additional window on the main screen and then, may display an object not displayed on a screen among objects selected by a user, on the pop-up window.

Additionally, as another example, the electronic device may assign an indication bar to the main screen and then, may display an object not displayed on a screen among objects selected by a user, on the indication bar.

According to various embodiments of the present disclosure, the electronic device displays an object not displayed on a screen among objects selected by a user. In addition, a selected object may be displayed through various methods other than the above-mentioned method.

In contrast, if the electronic device determines that the preselected object is within the display area after page switching in operation 309, then the electronic device proceeds to operation 315 at which the electronic device confirms that the selected object in the sub screen is newly displayed on the switched page. For example, at operation 315, the electronic device determines whether the object in the sub screen is included in the switched page.

If the electronic device determines that the selected object in the sub screen is newly displayed on the switched page at operation 315, then the electronic device proceeds to operation 317 at which the electronic device removes the object in the switched page from the sub screen.

According to various embodiments of the present disclosure, when operation 311 and operation 317 are performed or when the electronic device determines that the selected object in the sub screen is not newly displayed on the switched page at operation 315, the electronic device determines whether to terminate an object list displaying process at operation 313. For example, at operation 313, the electronic device determines whether the object list displaying process is completed. The electronic device may determine whether the object list displaying process is completed according to user input.

If the electronic device determines that the object list displaying process is not terminated at operation 313, then the electronic device proceeds to operation 303 at which the electronic device performs the corresponding operations again. According to various embodiments of the present disclosure, the electronic device displays an object list, adds selected objects not displayed due to page switching to a sub screen, and removes selected object displayed on a main screen after page switching from the sub screen.

In contrast, if the electronic device determines that the object list displaying process is terminated at operation 313, then the electronic device terminates this algorithm.

The electronic device may perform an edit process on a sub screen including selected objects not displayed due to page switching.

For example, the electronic device may detect a user's gesture and enlarges the sub screen to provide a list of selected objects in a sub screen.

As another example, the electronic device may arrange the objects in the sub screen on the switched page.

As another example, the electronic device may detect a user's gesture to perform an edit process on an object in the sub screen, such as move, select, select and cancel, delete, object grouping, and object transfer.

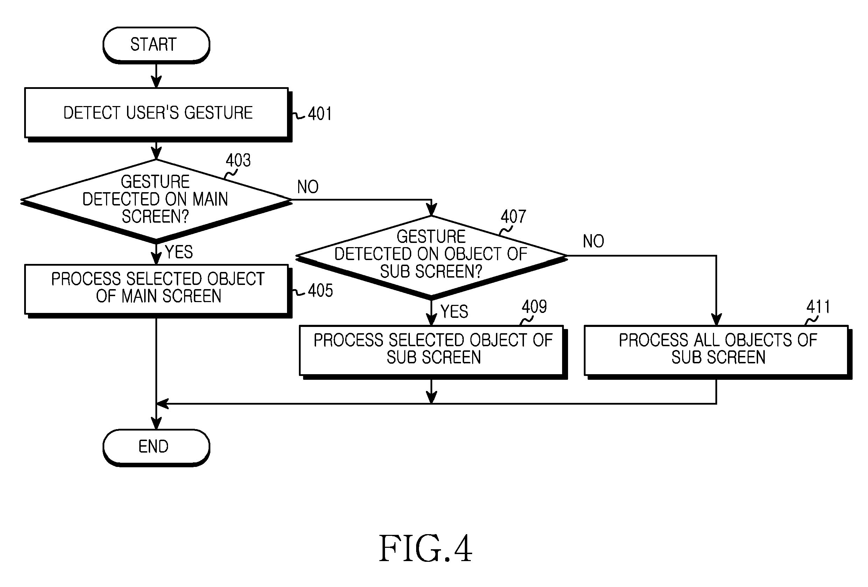

FIG. 4 is a flowchart illustrating a process of processing an object displayed on a sub screen in an electronic device according to an embodiment of the present disclosure.

Referring to FIG. 4, at operation 401, the electronic device detects a user's gesture.

At operation 403, the electronic device confirms whether a gesture is detected on a main screen. For example, at operation 403, the electronic device determines whether a gesture is detected on the main screen.

If the electronic device determines that the gesture is detected on the main screen at operation 403, then the electronic device proceeds to operation 405 at which the electronic device processes a selected object of the main screen. The edit process such as object move, select, select and cancel, delete, and object grouping in the main screen selected by the user's gesture may be performed at operation 405.

In contrast, if the electronic device determines that the gesture is detected on the sub screen at operation 403, then the electronic device proceeds to operation 407 at which the electronic device determines whether the gesture is detected on an object of the sub screen or on an area of the sub screen excluding an object.

If the electronic device determines that the gesture is detected on the object of the sub screen at operation 407, then the electronic device proceeds to operation 409 at which the electronic device processes the object of the sub screen selected by a user.

According to various embodiments of the present disclosure, at operation 409, the edit process such as move, select, select and cancel, delete, and object grouping on the object selected by the user's gesture among objects of the sub screen may be performed.

Furthermore, if the electronic device determines that the gesture is detected on the area of the sub screen excluding an object at operation 407, then the electronic device proceeds to operation 411 at which the electronic device processes all objects of the sub screen.

According to various embodiments of the present disclosure, at operation 411, an edit process such as select, select and cancel, move, delete, and object grouping of all objects in the sub screen may be performed.

According to various embodiments of the present disclosure, the electronic device may edit objects in the main screen and objects in the sub screen through a user's gesture.

The electronic device performing the above process terminates an algorithm according to an embodiment of the present disclosure.

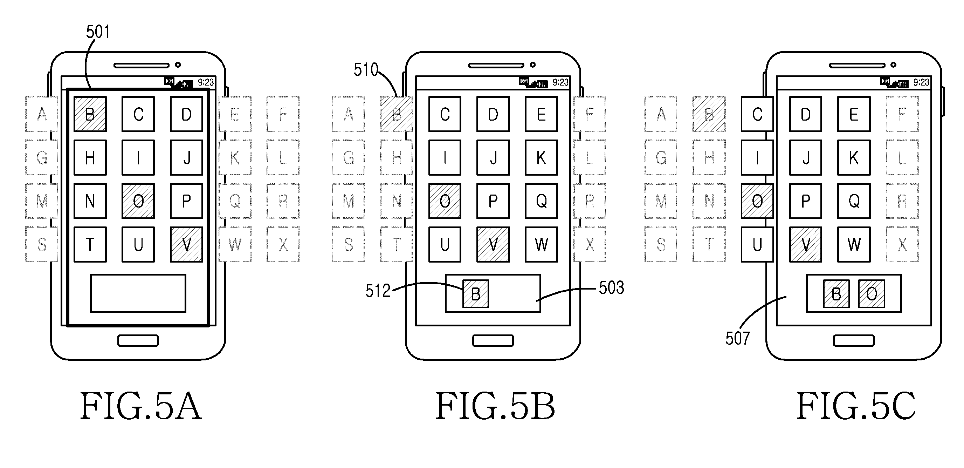

FIGS. 5A, 5B and 5C are views of a screen when an electronic device displays an object state according to an embodiment of the present disclosure.

Referring to FIG. 5A, the electronic device may display a plurality of objects. The number of objects to be displayed is large, but due to a limited size of a display area, the number of objects to be displayed on the electronic device may be limited.

Objects B, C, D, H, I, J, N, O, P, T, U, and V 501 are displayed on a screen of the electronic device, and the remaining objects exist actually but are not displayed on the screen. The objects not displayed may exist on a different page from the objects displayed currently.

Furthermore, the shaded objects B, O, and V among the displayed objects of the electronic device correspond to objects selected by a user. The selected objects may be edited according to a user's gesture.

Furthermore, if the electronic device detects a user's gesture for requesting page switching, then the electronic device may switch a page by moving the displayed page by a predetermined interval.

Moving a screen by a predetermined interval refers to an operation by which a displayed object disappears from a screen by a predetermined interval and a new object is displayed.

According to various embodiments of the present disclosure, referring to FIG. 5B, once a user's gesture for requesting page switching is detected, one column including objects B, H, N, and T moves and disappear from the display area of the electronic device, and then one column including objects E, K, Q, and W may be newly displayed on the display area of the electronic device.

Referring to FIG. 5B, the preselected object B 510 disappears from the display screen due to page switching and information on the disappeared object B is displayed 512 on the sub screen 503.

Referring to FIG. 5C, a situation 507 in which the displayed preselected object O disappears from the display area due to page switching and the disappeared object O is displayed on the sub screen is illustrated.

An electronic device according to the related art does not provide information on a selected object even when a preselected object disappears from a display screen due to page switching. As a result, a user of the electronic device according to the related art needs to switch a current page into a page including a preselected object so as to confirm the preselected object.

In order to solve such an issue, according to various embodiments of the present disclosure, the electronic device allocates a sub screen to a portion of the display area so as to display information on a preselected object (e.g., a thumbnail, an icon, and a file name of a selected object) on the sub screen. An object displayed on the sub screen may be an object not displayed on a current display screen among objects selected by a user. According to various embodiments of the present disclosure, the electronic device adds an object disappearing from a switched page, to the sub screen, and removes an object newly appearing on the switched page, from the sub screen.

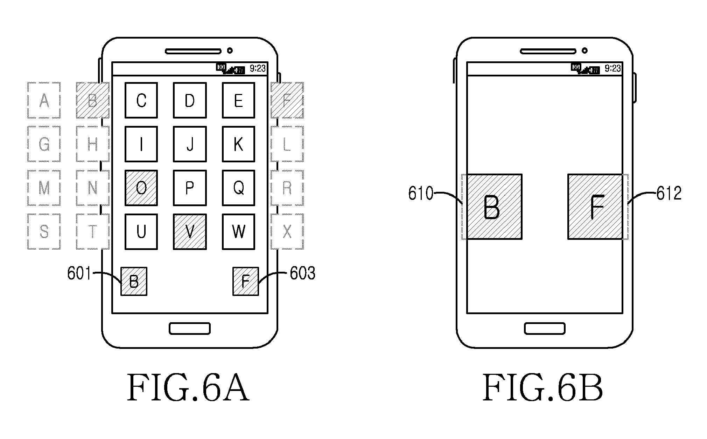

FIGS. 6A and 6B are views of a screen when an electronic device displays an object state according to another embodiment of the present disclosure.

Referring to FIG. 6A, the electronic device may display a plurality of objects. The number of objects to be displayed is large, but due to a limited size of a display area, the number of objects to be displayed on the electronic device may be limited.

Objects C, D, E, I, J, K, O, P, Q, U, V, and W are displayed on a screen of the electronic device, and the remaining objects exist but are not displayed on the screen. Furthermore, the shaded objects O and V among the displayed objects of the electronic device refer to objects selected by a user. The selected objects may be edited according to a user's gesture.

Furthermore, the shaded objects B and F not displayed on the electronic device refer to objects selected by a user.

Referring to FIG. 6A, the object B 601 is positioned at the left or the selected object F 603 is positioned at the right on the basis of the center of a currently-displayed screen.

According to various embodiments of the present disclosure, when a user of the electronic device generates a gesture for switching into the left page, the selected object B may be displayed on the display area of the electronic device. In contrast, when a user of the electronic device generates a gesture for switching into the right page, the selected object F may be displayed on the display area of the electronic device.

The electronic device may display an object displayed on a sub screen to be fit for a hidden direction.

According to various embodiments of the present disclosure, referring to FIG. 6A, the electronic device arranges the selected object B at the left page to in the left direction of the sub screen on the basis of the center of the current page and arranges the selected object F at the right page to be in the right direction of the sub screen on the basis of the center of the current page.

As a result, a user of the electronic device performs page switching to the left direction by using an object arranged in the left direction so that the object B is recognized.

As described above, the sub screen displays information on an object selected by a user, and the number of objects displayable on the sub screen is limited.

Accordingly, when the number of objects displayable on a sub screen is excessive, only the displayable objects are displayed and a scroll process is possible to display the selected objects not displayed by detecting a user's gesture.

At this point, the electronic device may display selected objects disposed on a page closest to a current display screen, on a sub screen above all.

According to various embodiments of the present disclosure, the electronic device may adjust a size of a selected object displayed on the sub screen so as to change the number of displayable objects. For one example, the electronic device may display a size of a selected object displayed on the sub screen to be smaller than a displayed object. As another example, the electronic device may display a portion of the selected object on the sub screen. For example, referring to FIG. 6B, a portion of the selected object is displayed 610 and 612 to be fit for a direction of a hidden object.

The size or position of the sub screen, as a portion of the main screen, may not be limited.

Furthermore, a selected object displayed through the sub screen may be controlled as follows.

For example, the electronic device may arrange the objects displayed on the sub screen in a specific page by detecting a user's gesture.

As another example, the electronic device may select or select and cancel an object displayed on the sub screen by detecting a user's gesture.

As another example, the electronic device may form objects displayed on the sub screen into at least one group by detecting a user's gesture.

As another example, the electronic device may select, or select and cancel all objects displayed on the sub screen simultaneously, or delete selected objects, by detecting a user's gesture.

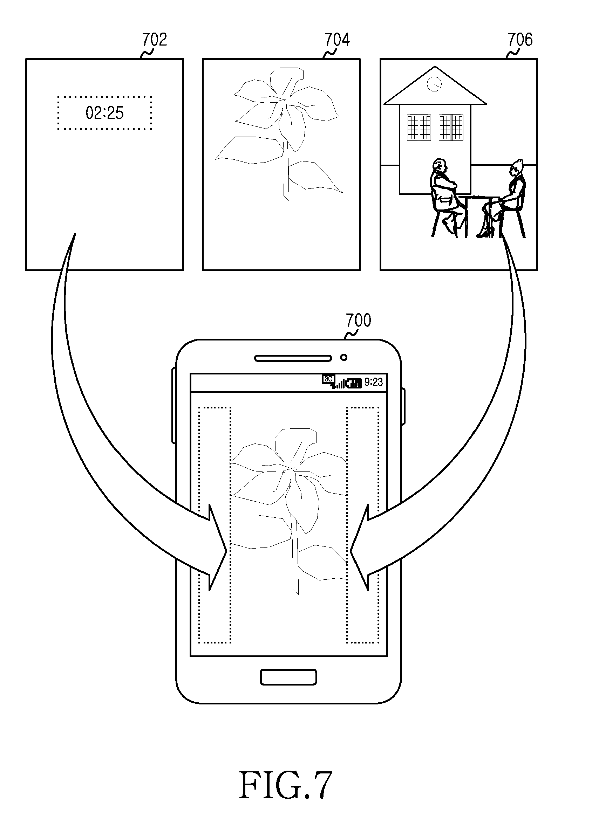

FIG. 7 is a view of a screen when an electronic device displays an object state according to an embodiment of the present disclosure.

Referring to FIG. 7, as mentioned above, the electronic device may display a standby screen including a plurality of pages and objects may be arranged on the standby screen.

The electronic device 700 of FIG. 7 may display a standby screen including three pages. Such a standby screen is a defined by a user. A watch indicating a current time is displayed on the standby screen 702 of the first page, a flower image background is set on the standby screen 704 of the second page, and a houses image background is set on the standby screen 706 of the third page.

As described above, a plurality of objects may be displayed on each page of the standby screen.

The electronic device 700 displays the second page at which a flower image background is currently set and a selected object displayed on a sub screen is distinguished on the basis of the currently displayed page.

For example, the electronic device may allocate the sub screen to the left area and right area of the currently displayed page.

In addition, the electronic device displays an object selected from the right page on the basis of the currently displayed page on the sub screen of the right area.

In contrast, the electronic device displays an object selected from the left page on the basis of the currently displayed page on the sub screen of the left area.

This is to apply direction information to the sub screen so as to easily confirm the position of a page including an object selected by a user, and the position of the sub screen is not limited to the above-mentioned left and right. According to various embodiments of the present disclosure, the electronic device allocates a sub screen to the top, bottom, left, right, or corner of the displayed page or fixes the position of the sub screen and adds direction information to an object to provide the position of a page at which a corresponding object exists.

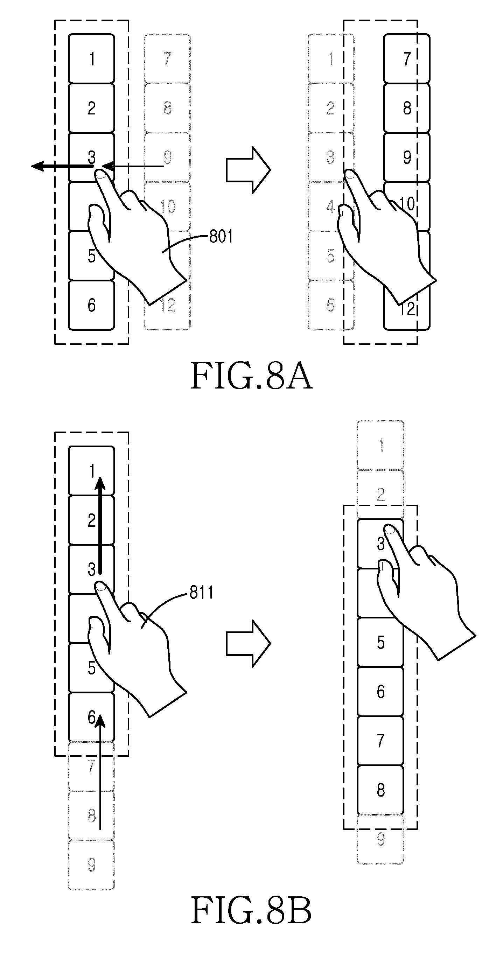

FIGS. 8A and 8B are views illustrating a method of displaying an object on a sub screen in an electronic device according to an embodiment of the present disclosure.

As mentioned above, the electronic device displays a sub screen at which an object selected by a user is displayed.

Only a limited number of objects may be displayed on such a sub screen.

If the number of objects displayed on the sub screen is large, the electronic device displays only the number of objects that can be displayed on the sub screen.

Then, the electronic device may change the objects displayed on the sub screen by detecting a user's gesture.

For example, referring to FIG. 8A, a selected object may be displayed by detecting a user's gesture distinguishing the left and right. According to various embodiments of the present disclosure, the electronic device displays objects 1 to 6 on the sub screen and then, when a user's gesture for left direction is detected at operation 801, the electronic device displays objects 7 to 12 instead of the objects 1 to 6. This is to display corresponding objects as objects move to the left or right direction within the sub screen according to a user's gesture.

If there are more objects to be displayed on the sub screen beside objects 1 to 12, the electronic device may display on the sub screen in the order of the objects 1 to 6, the objects 7 to 12, and the remaining objects by a user's gesture.

Moreover, if it is assumed that there are objects 1 to 12 to be displayed on the sub screen under limited circumstances, the electronic device may alternately display on the sub screen the objects 1 to 6 and the objects 7 to 12 by detecting a user's gesture.

As another example, referring to FIG. 8B, a selected object may be displayed by detecting a user's gesture distinguishing the top and bottom (e.g., distinguishing up and down). According to various embodiments of the present disclosure, the electronic device displays objects 1 to 6 on the sub screen and then, when a user's gesture for up direction is detected at operation 811, the electronic device displays objects 7 to 12 instead of the objects 1 to 6. This is to display corresponding objects as objects move to the up or down direction within the sub screen according to a user's gesture.

At this point, the electronic device may scroll a predetermined number of objects, and when a user's gesturer for one direction is detected, may circulate and display the object. For example, the electronic device displays the objects 1 to 6 first, and moves each object upward by detecting a user's gesture for the up direction. While the last object is displayed, the electronic device displays the first object 1 again if a user's gesture is detected. Consequently, a user is able to display and confirm a previously displayed object by using a user's gesture for the up direction.

Of course, a user may confirm a previously displayed object by generating a user's gesture for an opposite direction (e.g., the down direction).

At this point, the electronic device may scroll a predetermined number of objects, and when a user's gesturer for one direction is detected, may display the object without circulation. For example, the electronic device displays the objects 1 to 6 first, and moves each object upward by detecting a user's gesture for the up direction. While the last object is displayed, the electronic device may not display the first object 1 again even if a user's gesture is detected and may not scroll an object any more. Consequently, a user may need to generate a user's gesture for opposite direction so as to confirm a previously displayed object.

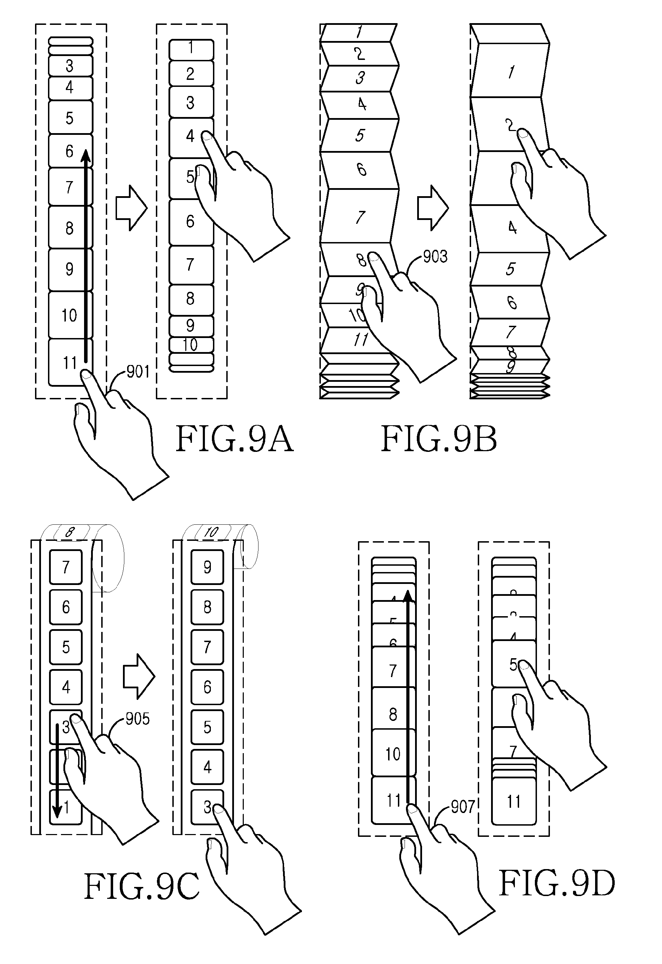

FIGS. 9A, 9B, 9C and 9D are views illustrating a method of displaying an object on a sub screen in an electronic device according to an embodiment of the present disclosure.

As mentioned above, the electronic device displays a sub screen at which an object selected by a user is displayed.

Only a limited number of objects may be displayed on such a sub screen.

If the number of objects displayed on the sub screen is large, the electronic device displays only the number of objects that can be displayed on the sub screen.

Then, the electronic device may change the objects displayed on the sub screen by detecting a user's gesture.

For example, as shown in FIG. 9A, the electronic device may display a selected object by detecting a user's gesture distinguishing the top and bottom (e.g., distinguishing up and down). According to various embodiments of the present disclosure, the electronic device displays all objects displayable on the sub screen.

However, because the sub screen has a limited size, the electronic device may vary the size of an object to be displayed and then, may display the object.

According to various embodiments of the present disclosure, the electronic device may display some objects on the sub screen in a normal size and may display remaining objects by reducing the sizes of the remaining objects or by overlapping the objects having a size other than a normal size.

When a user's gesture is detected in such a situation at operation 901, the electronic device displays objects displayed in an overlapping state with a normal size and other objects displayed in a normal state to overlap each other. At this point, the electronic device may display objects that a user wants and neighboring objects in a normal size.

Additionally, the electronic device may adjust a size of an object to be displayed on the sub screen on the basis of a currently displayed page.

According to various embodiments of the present disclosure, the electronic device displays objects in a page adjacent to the currently displayed page in a normal size, and objects in a page far from the currently displayed page to overlap each other. For example, when the third page in a standby screen including five pages, which are switched by detecting a user's gesture, is displayed, the electronic device displays objects in the second page or the fourth page with a normal size and displays objects in the first page or the fifth page so as to overlap each other.

As another example, referring to FIG. 9B, the electronic device may display a selected object by detecting a user's gesture distinguishing the top and bottom (e.g., distinguishing up and down). According to various embodiments of the present disclosure, the electronic device displays all objects displayable on the sub screen.

However, because the sub screen has a limited size, the electronic device may display objects to contact each other in a wrinkle or cascade form.

According to an embodiment of the present disclosure, the electronic device displays folded objects on the sub screen and then, when a user's gesture is detected at operation 903, the electronic device unfolds and displays the folded objects while folding the unfolded objects.

As another example, referring to FIG. 9C, the electronic device may display a selected object by detecting a user's gesture at operation 905 distinguishing the top and bottom (e.g., distinguishing up and down). According to various embodiments of the present disclosure, the electronic device displays all objects displayable on the sub screen.

However, because the sub screen has a limited size, the electronic device may display an object to be displayed through rolling.

According to an embodiment of the present disclosure, the electronic device displays objects on the sub screen, and then when a user's gesture is detected, displays hidden objects on a screen.

As another example, referring to FIG. 9D, the electronic device may display a selected object by detecting a user's gesture at operation 907 distinguishing the top and bottom (e.g., distinguishing up and down). According to various embodiments of the present disclosure, the electronic device displays all objects displayable on the sub screen.

However, because the sub screen has a limited size, the electronic device may vary the size of an object to be displayed and then, may display the object.

According to various embodiments of the present disclosure, the electronic device may display some objects on the sub screen in a normal size and may display remaining objects by reducing the sizes of the remaining objects or by overlapping objects having a size other than a normal size.

When a user's gesture is detected in such a situation, the electronic device displays objects displayed in an overlapping state with a normal size and other objects displayed in a normal state to overlap each other. At this point, the electronic device may display objects that a user wants and neighboring objects in a normal size.

Additionally, the electronic device may adjust a size of an object to be displayed on the sub screen on the basis of a currently displayed page.

According to various embodiments of the present disclosure, the electronic device displays objects in a page adjacent to the currently displayed page in a normal size, and objects in a page far from the currently displayed page to overlap each other. For example, when the third page in a standby screen including five pages, which are switched by detecting a user's gesture, is displayed, the electronic device displays objects in the second page or the fourth page with a normal size and objects in the first page or the fifth page to overlap each other.

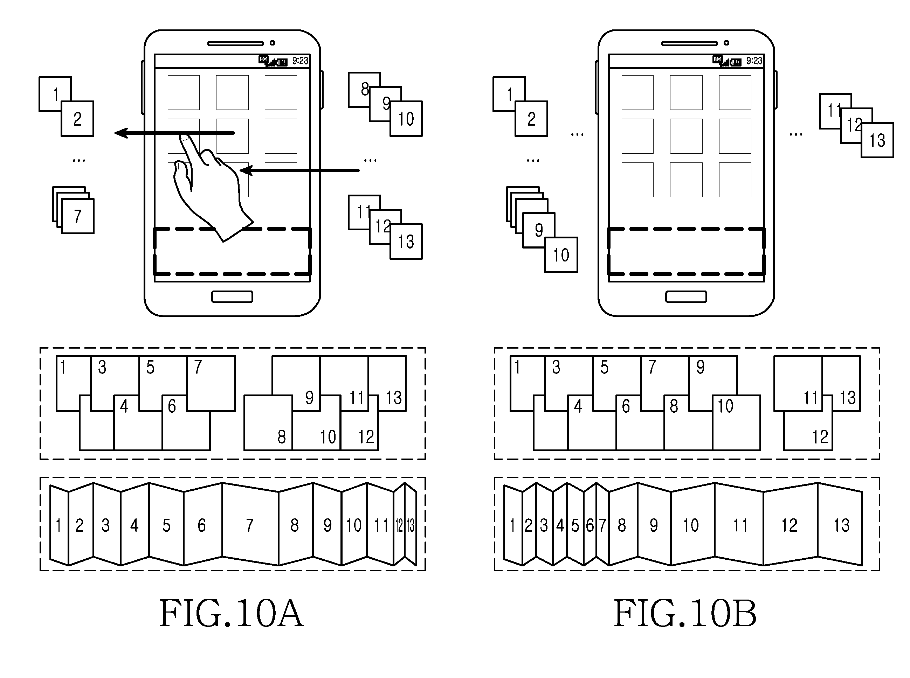

FIGS. 10A and 10B are views illustrating a method of displaying an object on a sub screen in an electronic device according to an embodiment of the present disclosure.

As mentioned above, the electronic device displays a sub screen at which an object selected by a user is displayed.

Only a limited number of objects may be displayed on such a sub screen.

If the number of objects displayed on the sub screen is large, the electronic device displays the selected objects to overlap each other or displays objects to be displayed to be folded in a wrinkle or cascade form.

Referring to FIG. 10A, a view illustrating a situation in which a user's gesture for page switching is detected in the electronic device is provided.

The electronic device displays an object selected by a user on a sub screen indicated with a dotted line. Referring to FIG. 10A, objects 1 to 13 are displayed on the sub screen. The objects 1 to 7 are displayed at the left on the basis of the currently displayed screen, and the remaining objects are displayed at the right on the basis of the currently displayed screen.

In such a state, a user generates a gesture for screen switching.

Referring to FIG. 10B, a view illustrating a situation in which a screen is switched by detecting a user's gesture in the electronic device is provided.

According to various embodiment of the present disclosure, the electronic device may move objects 8 to 10 at the right among selected objects to the left through screen switching according to a user's gesture.

Accordingly, the electronic device may change the direction of a moved object by changing the arrangement in the sub screen.

In more detail, a selected object in the right area of the sub screen is moved to the left area.

On the basis of a middle space of the sub screen, the left area and the right area are separated. Although the objects 1 to 7 are arranged at the left area as shown in FIG. 10A, the objects 1 to 10 are arranged at the left area through a user's gesture as shown in FIG. 10B.

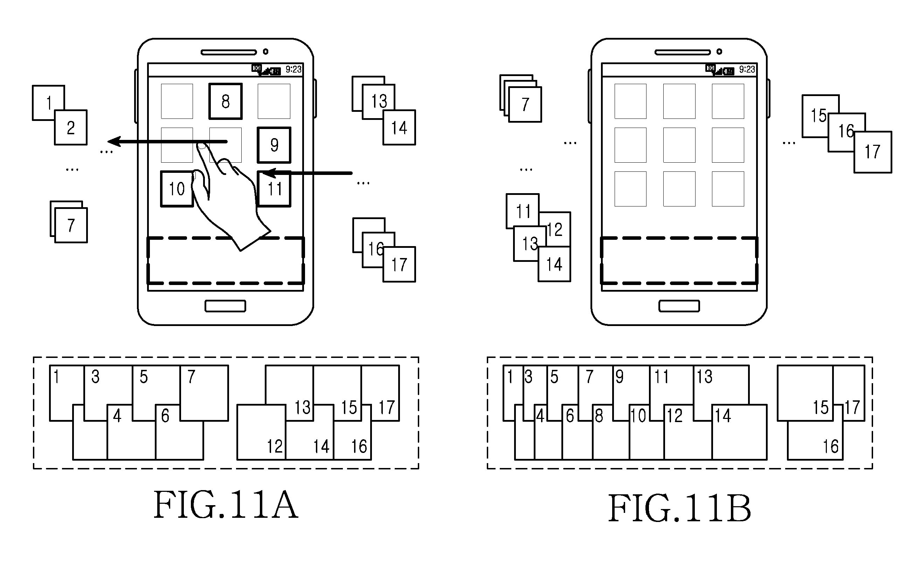

FIGS. 11A and 11B are views illustrating a method of displaying an object on a sub screen in an electronic device according to an embodiment of the present disclosure.

As mentioned above, the electronic device displays a sub screen at which an object selected by a user is displayed.

Only a limited number of objects may be displayed on such a sub screen.

If the number of objects displayed on the sub screen is large, the electronic device displays the selected objects to overlap each other or displays objects to be displayed to be folded in a wrinkle or cascade form.

Referring to FIG. 11A, a view illustrating a situation in which a user's gesture for page switching is detected in the electronic device.

The electronic device displays an object selected by a user on a sub screen indicated with a dotted line. Referring to FIG. 11A, objects 1 to 7 and 12 to 17 are displayed on the sub screen. The objects 1 to 7 are displayed at the left on the basis of the currently displayed screen, and the remaining objects are displayed at the right on the basis of the currently displayed screen.

In such a state, a user selects an additional object from a currently displayed screen and generates a gesture for screen switching. According to various embodiments of the present disclosure, a user of the electronic device selects objects 8 to 11 from objects on the currently displayed screen but as the selected objects 8 to 11 are displayed, they are not included on the sub screen.

Referring to FIG. 11B, a view illustrating a situation in which a screen is switched by detecting a user's gesture in the electronic device is provided.

According to various embodiments of the present disclosure, the electronic device includes a selected object disappearing from the screen due to the screen switching according to a user's gesture, in the sub screen.

At this point, the electronic device may move objects 8 to 10 at the right among selected objects to the left through screen switching according to a user's gesture. Therefore, the electronic device changes an arrangement in the sub screen to change a direction of a moved object.

On the basis of a middle space of the sub screen, the left area and the right area are separated. Although the objects 1 to 7 are arranged at the left area as shown in FIG. 11A, the objects 1 to 14 are arranged at the left area through a user's gesture as shown in FIG. 11B.

An electronic device allocating a sub screen to display selected objects and automatically arranging the selected objects on a sub area according to an embodiment of the present disclosure distinguishes and displays objects disappearing from the middle screen among objects selected by a user. Therefore, various embodiments of the present disclosure provides an easier selection of an object than an electronic device according to the related art provides.

Furthermore, when the electronic device is used, a time for moving a selected object to another page becomes shorter than before

For example, when five objects are rearranged being three pages away from a current page, an electronic device according to the related art performs page switching twenty seven times. However, according to various embodiments of the present disclosure, an electronic device performs page switching three times. The reason is that an electric device according to various embodiments of the present disclosure omits a process for moving an object to an existing original page and moves an object in a sub screen to a desired page.

Furthermore, an electronic device according to the related art performs page switching while maintaining a touch input to move an object. However, according to various embodiments of the present disclosure, an electronic device moves an object without omitting such a process.

According to a method and device for displaying an object state, a list of objects selected by a user is displayed on a screen, and an object is directly edited from the displayed list of objects, so that objects may be managed easier than made possible by an electronic device according to the related art.

It will be appreciated that various embodiments of the present disclosure according to the claims and description in the specification can be realized in the form of hardware, software or a combination of hardware and software. Any such software may be stored in a non-transient computer readable storage medium. The non-transient computer readable storage medium stores one or more programs (software modules), the one or more programs comprising instructions, which when executed by one or more processors in an electronic device, cause the electronic device to perform a method of the present disclosure. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of displaying an object state in an electronic device, the method comprising:
displaying an object list on a main screen;
determining an object selected by a user's gesture; and
displaying the selected object on a sub screen.

2. The method of claim 1, further comprising:
performing an edit process on the selected object on the sub screen,
wherein the edit process comprises at least one of a process of moving the selected object to the main screen, a process of selecting the selected object, a process of cancelling the selected object, a process of deleting the selected object, a process of grouping the selected object, and a process of transmitting the selected object.

3. The method of claim 1, wherein the sub screen is displayed in at least one form of a portion of the main screen, a layer on the main screen, a pop-up window, and an indication bar.

4. The method of claim 1, wherein the displaying of the selected object on the sub screen comprises:
classifying only selected objects disappearing from a current output screen and including the classified selected objects on the sub screen.

5. The method of claim 4, wherein the displaying of the selected object on the sub screen comprises:
displaying the selected object on the sub screen when the selected object disappears from a current output screen resulting from page switching; and
removing the selected object from the sub screen when the selected object on the sub screen is displayed on a current output screen.

6. The method of claim 1, wherein the displaying of the selected object on the sub screen comprises displaying direction information on the selected object.

7. The method of claim 1, wherein the displaying of the selected object on the sub screen comprises changing an arrangement of the selected object on the sub screen according to the user's gesture.

8. The method of claim 1, wherein the displaying of the selected object on the sub screen comprises one of including a portion of the selected object on the sub screen, overlapping and displaying the selected object, folding and displaying the selected object, and adjusting and displaying a size of the selected object.

9. An electronic device displaying an object state, the device comprising:
a display; and
at least one processor,
wherein the at least one processor displays an object list on a main screen, determines an object selected by a user's gesture, and displays the selected object on a sub screen.

10. The device of claim 9, wherein the at least one processor performs an edit process on the selected object on the sub screen,
wherein the edit process comprises at least one of a process of moving the selected object to the main screen, a process of selecting the selected object, a process of cancelling the selected object, a process of deleting the selected object, a process of grouping the selected object, and a process of transmitting the selected object.

11. The device of claim 9, wherein the at least one processor classifies only selected objects disappearing from a current output screen and includes the classified selected objects on the sub screen.

12. The device of claim 11, wherein the at least one processor
displays the selected object on the sub screen when the selected object disappears from a current output screen resulting from page switching; and
removes the selected object from the sub screen when the selected object on the sub screen is displayed on a current output screen.

13. The device of claim 9, wherein the at least one processor displays direction information on the selected object.

14. The device of claim 9, wherein the at least one processor changes an arrangement of the selected object on the sub screen according to the user's gesture.

15. The device of claim 9, wherein the at least one processor includes a portion of the selected object on the sub screen, overlaps and displays the selected object, folds and displays the selected object, and adjusts and displays a size of the selected object.
